# EUROPÄISCHE PATENTSCHRIFT

(11) **EP 1 129 909 B1**
(45) Veröffentlichungstag und Bekanntmachung des Hinweises auf die Patenterteilung: **13.10.2004**
(21) Anmeldenummer: 01103760.3
(22) Anmeldetag: 15.02.2001
(51) Int. Cl.: B60R 21/13

(54) **Haltevorrichtung für den Überrollkörper eines Überrollschutzsystems**
Retaining device for the rollbar of a rollover protection system
Dispositif de retenue de l'arceau d'un système de protection contre le retournement

(30) Priorität: 04.03.2000 DE 10010765; 12.08.2000 DE 10039580
(43) Veröffentlichungstag der Anmeldung: 05.09.2001
(73) Patentinhaber: ISE Innomotive Systems Europe GmbH, 51702 Bergneustadt (DE)
(72) Erfinder: Latussek, Holger, 51702 Bergneustadt (DE); Janisch, Mirko, 53721 Siegburg (DE); Menne, Hans-Gerd, 51702 Bergneustadt (DE); Nowack, Reinhard, 57489 Drolshagen (DE)
(74) Vertreter: Fuchs Mehler Weiss & Fritzsche

(56) Entgegenhaltungen:
- EP-A- 0 729 867
- DE-A- 4 342 400
- DE-C- 19 949 944

## Beschreibung

Die Erfindung bezieht sich auf eine Haltevorrichtung für den Überrollkörper eines Überrollschutzsystems für Kraftfahrzeuge, das ein am Überrollkörper befestigtes Halteglied mit einem Haltebolzen aufweist, der in lösbarer mechanischer Wirkverbindung mit einem Auslöseglied eines sensorgesteuerten Auslösesystems steht.

Derartige Überrollschutzsysteme dienen zum Schutz der Insassen in Kraftfahrzeugen ohne schützendes Dach, typischerweise in Cabriolets oder Sportwagen. Dabei setzen sich am Markt immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt zu diesem Zweck typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten oder durch ein pyrotechnisches Auslöseglied gebildet ist.

Das Halteglied muß dabei nach einer gewollten Auslösung des Überrollkörpers verspannungsfrei wieder selbsttätig in die haltende Ausgangsstellung durch Verrasten in dem Auslöseglied bringbar sein. Fertigungstoleranzen und Fluchtungsfehler stehen dieser Forderung entgegen, die durch Konstruktionsvarianten von Haltevorrichtung nach dem Stand der Technik nur unvollkommen kompensiert werden können.

So zeigt die EP 0 729 867 A1, die dem Oberbegriff des Anspruchs 1 entspricht, eine sogenannte, mit dem Überrollbügel mechanisch beweglich verbundene Haltewippe als Halteglied, die einen Haltebolzen besitzt, der in Wirkverbindung mit einem hakenförmigen Auslöseglied steht, das durch Aktivieren des Auslösemagneten in eine den Haltebolzen freigebende Stellung bewegbar ist. Trotz der drehbeweglich angelenkten Haltewippe und einer Einlaufschräge am Auslöseglied kann das bekannte System durch seine Starrheit nicht alle Fertigungstoleranzen und Fluchtungsfehler, zumindest nicht ohne das Auftreten von Querkräften, ausgleichen.

Eine vergleichbare Konstruktion der Haltewippe zeigt die DE 43 42 400 A1.

Der gleiche Nachteil gilt für die Haltevorrichtung nach der EP 0 760 314 A 1. Diese weist eine mit dem Überrollbügel starr verbundene biegefeste Haltestange auf, an der Vorsprünge zum Eingriff von Halteklauen vorgesehen sind, die schwenkbar am Fahrzeugaufbau gelagert sind. Die Halteklauen sind mittels des Crashmagneten aus der Verriegelungsstellung von den Vorsprüngen weg in eine Freigabestellung schwenkbar. Dabei sind die Halteklauen unter der Wirkung einer Feder in die Freigabestellung vorgespannt, wobei ein durch den Auslösemagneten bestätigbarer Stift die Halteklauen gegen das Verschwenken in die Freigabestellung blockiert.

Ferner ist durch die DE 197 50 457 A 1 eine Haltevorrichtung mit einem glockenförmigen Halteglied, in das Kugeln einrasten, bekannt geworden. Dieses System erfordert eine zeitaufwendige Justierung, um zu gewährleisten, daß das Halteglied nach einer Auslösung wieder selbsttätig in die Haltestellung bringbar ist. Zum anderen hat sich bei der Simulation von extremen Einbausituationen, d.h. bei einem sehr starken diagonalen Verspannen des Überrollbügels, gezeigt, daß die Kugeln trotz sorgfältiger Einstellung des Haltegliedes, nicht immer sämtlich selbsttätig beim Zurückdrücken des Überrollbügels in der Haltestelllung einrasten. Ähnliches gilt für die Haltevorrichtung aus der DE 37 32 562 C1.

Die EP 0 761 505 A1 zeigt eine Haltevorrichtung für einen Überrollkörper mit einer starren Haltestange als Halteglied, die eine Kegelspitze aufweist und die mit einer umlaufenden Nut zum Eingriff von Sperrkugeln versehen ist, die in Querbohrungen eines mit dem Auslösesystem verbundenen Halteelementes radial beweglich angeordnet sind. Auch diese Haltevorrichtung kann nicht alle Fertigungs- und Montagetoleranzen sicher und ohne Querbelastungen ausgleichen.

In der älteren Patentanmeldung 199 49 944.6 wird eine Haltevorrichtung für den Überrollkörper eines Überrollschutzsystems beschrieben, bei der der Haltebolzen des Haltegliedes für den Wirkeingriff mit dem Auslösesystem in einer Haltegabel entweder starr oder alternativ über eine Wippe gelagert ist, und bei der der Haltegabel eine Druckfeder vorgespannt zugeordnet ist, derart, daß darüber eine elastische Wirkverbindung des Haltegliedes mit dem Auslöseglied hergestellt ist. Bei einer starren Lagerung des Haltebolzens in der Haltegabel ist dies durch eine Taumelbewegung der Haltegabel möglich, wogegen im Fall der Wippe deren Aufhängung in der Haltegabel entsprechende Bewegungs-Freiheitsgrade aufweist.

Der Erfindung liegt die Aufgabe zugrunde, die eingangs bezeichnete Haltevorrichtung so auszubilden, daß Fluchtfehler und Fertigungstoleranzen beim Wiedereinfahren des Überrollkörpers und damit des Haltegliedes in das Auslöseglied auf einfache Weise wirksam ohne Verspannungen ausgeglichen werden können.

Die Lösung dieser Aufgabe gelingt erfindungsgemäß, ausgehend von einer Haltevorrichtung für den Überrollkörper eines Überrollschutzsystems für Kraftfahrzeuge, das ein am Überrollkörper befestigtes Halteglied mit einem Haltebolzen aufweist, der in lösbarer mechanischer Wirkverbindung mit einem Auslöseglied eines sensorgesteuerten Auslösesystems steht, dadurch, daß der Haltebolzen in dem Halteglied radial elastisch nachgebend gehaltert ist.

Durch die radial elastisch nachgebende Halterung des Haltebolzens in dem Halteglied können auf einfache Weise montagebedingte Fluchtfehler und Fertigungstoleranzen beim Wiedereinfahren eines ausgelösten Überrollkörpers und damit des Haltegliedes in das Auslöseglied wirksam ohne das Auftreten von mechanischen Verspannungen im Halteglied ausgeglichen werden.

Besondere Vorteile werden gemäß einer Weiterbildung der Erfindung erreicht, wenn das Halteglied einen Aufnahmekörper aufweist, der an zwei gegenüberliegenden Bereichen Durchgangs-Bohrungen für den Haltebölzen besitzt, die eine elastisch nachgebende Auskleidung aufweisen, sowie wenn der Aufnahmekörper glockenförmig ausgebildet ist.

Die Glockenform des Haltegliedes gewährleistet, daß kein Schmutz an der Schnittstelle zwischen Haltebolzen und Auslöseglied in das System eindringen kann und eine gewollte Auslösung verhindern könnte. Ferner ermöglicht der glockenförmige Aufnahmekörper eine konstruktiv günstige Lagerung des Haltebolzens und ein Einbringen einer elastisch nachgebenden Auskleidung für die elastische Lagerung des Haltebolzens.

Dabei ist die Haltevorrichtung gemäß einer Ausgestaltung der Erfindung zweckmäßig so ausgebildet, daß die Durchgangs-Bohrungen in der Wandung des Aufnahmekörpers als Langloch ausgebildet sind, das sich quer zur Wirkrichtung der Haltekraft erstreckt.

Diese Langlöcher ermöglichen das notwendige Spiel in der Lagerung des Haltebolzens, um den Ausgleich der Montage- und Fertigungstoleranzen zu ermöglichen.

Grundsätzlich könnte man das Langloch mit einer elastisch nachgebenden Auskleidung versehen. Fertigungstechnisch ist es jedoch vorteilhafter, wenn gemäß einer Ausgestaltung der Erfindung die Langloch-Durchgangsbohrungen als abgesetzte Langlöcher ausgebildet sind, mit der größere Ausnehmung am wandseitigen Ende, und in der größere Ausnehmung ein komplementär geformtes, elastisch nachgebendes Einsatzteil aufgenommen ist, wobei das Einsatzteil vorzugsweise aus einem elastomeren Material, vorzugsweise Zellkautschuk, besteht.

Diese Einsatzteile lassen sich wirtschaftlich günstig getrennt in großen Stückzahlen herstellen und leicht zusammen mit dem Haltebolzen montieren. Die innere Stufe im Lagerzapfen im Anschluß an die größere Ausnehmung verhindert dabei eine axiale Verschiebung der Einlagen.

Die Konstruktion kann dabei so getroffen werden, daß die abgesetzte Ausnehmung jeweils konzentrisch zu den Langloch-Durchgangsbohrungen ist. Dadurch kann zwar einerseits der Haltebolzen nach allen Richtungen ausweichen, andererseits wird jedoch das elastisch nachgebende Einsatzteil in Richtung der im Ruhezustand ständig anliegenden Halte-Wirkkraft, bedingt durch die Vorspannung der den Überrollbügel im Crashfall antreibenden Druckfedern, zusammengequetscht, was im Laufe der Betriebsjahre zu einer Materialermüdung führt.

Diese Materialermüdung kann man unter Erhalt einer ausreichenden elastisch nachgebenden Halterung des Haltebolzens gemäß einer Weiterbildung der Erfindung vermeiden, wenn die abgesetzte Ausnehmung jeweils exzentrisch zu den Langloch-Durchgangsbohrungen in dem Aufnahmekörper ausgebildet ist, derart, daß der Haltebolzen in Richtung der Halte-Wirkkraft direkt an der Wandung der Langloch-Durchgangsbohrungen anliegt.

Bei dieser Weiterbildung der erfindungsgemäßen Haltevorrichtung sitzt dadurch bei eingefahrenem Überrollkörper, d.h. im Ruhezustand, der in der weit überwiegenden Betriebszeit gegeben ist, der Haltebolzen in Richtung der Wirkkraft direkt auf der Wandung der Langloch-Durchgangsbohrungen in dem meist metallischen Aufnahmekörper auf, so daß in diesem Bereich die elastische Lagerung geschont wird. Obwohl dadurch der Haltebolzen in Z(-)-Richtung nicht ausweichen kann, ist durch die Beweglichkeit des Haltebolzen in Y(±)-Richtung sowie in Z(+)-Richtung eine ausreichende elastische Lagerung des Haltegliedes gewährleistet, so daß ein problemloser, spannungsfreies Einfahren des ausgelösten Haltegliedes in das Auslöseglied möglich ist.

Um eine gute Lagerung des Haltebolzens zu gewährleisten, ist die Haltevorrichtung zweckmäßig so ausgestaltet, daß die Durchgangsbohrungen innen angeformte Lagerzapfen für den Haltebolzen besitzen. Alternativ kann die Lagerung so getroffen werden, daß auf dem Haltebolzen Lagerzapfen gelagert sind, die Teil eines H-förmigen Verbindungsgliedes sind, das an seinen, den Lagerzapfen abgewandten Enden jeweils einen Justierzapfen zur Halterung in dem Aufnahmekörper besitzt.

Diese kräftemäßig indirekte Lagerung des Haltebolzens über das Verbindungsglied in dem Aufnahmekörper ermöglicht den Ausgleich von Lagetoleranzen, die bei der Montage des Auslösesystems und des Haltebolzens entstehen.

Um das Halteglied mit dem Überrollkörper, der typischerweise als U-förmiger Überrollbügel ausgebildet ist, zu verbinden, ist die Haltevorrichtung gemäß einer Weiterbildung der Erfindung so ausgebildet, daß an der Oberseite des glockenförmigen Aufnahmekörpers zwei Befestigungslaschen zur Befestigung mit einer Schelle angeformt sind, und die Schelle mit dem Überrollkörper verbindbar ist.

Bei einer Haltevorrichtung mit einem Überrollkörper in Form eines U-förmigen Überrollbügels mit zwei parallelen Schenkelrohren, die an ihren offenen Enden über eine durch einen Profilkörper gebildeten Traverse miteinander verbunden sind, kann die Verbindung zum Überrollkörper auch so getroffen werden, daß der Aufnahmekörper in der Traverse integriert ist. Diese Ausführungsform erlaubt eine einfache, platzsparende Verbindung des Haltebolzens mit dem Überrollkörper.

Vorzugsweise besteht der glockenförmige Aufnahmekörper mit seinen Lagerzapfen aus Kunststoff und ist dabei vorzugsweise ein SpritzgieBteil. Auf diese Weise läßt sich das Halteglied sehr wirtschaftlich herstellen.

Anhand von in den Zeichnungen in verschiedenen Ansichten dargestellten Ausführungsbeispielen wird die Erfindung näher erläutert.

Es zeigen:
- Fig. 1: in einer Explosionsdarstellung die wesentlichen Komponenten einer ersten Ausführungsform des erfindungsgemäßen Haltegliedes mit einem glockenförmigen Aufnahmekörper, in dem ein Haltebolzen für den Wirkeingriff mit einem Auslösesystem elastisch nachgebend gelagert ist,
- Fig. 2: eine Draufsicht auf die Unterseite des Aufnahmekörpers mit Darstellung der Lagerzapfen des Haltebolzens im Innern des Aufnahmekörpers,
- Fig. 3: im Figurenteil A eine Seitenansicht des Haltegliedes entlang der Achse des Haltebolzens, im Figurenteil B eine Schnittansicht durch den glockenförmigen Aufnahmekörper entlang der Schnittlinie A - A im Figurenteil A, sowie im Figurenteil C eine Schnittansicht durch den Aufnahmekörper genommen entlang der Linie B - B im Figurenteil B,
- Fig. 4: die Wirkverbindung des Haltebolzens des Haltegliedes mit einem Doppelhebel-Auslösesystem,
- Fig. 5: eine vergrößerte Explosionsdarstellung entsprechend Fig. 1 mit aufgeschnittenem Aufnahmekörper zur Darstellung des Innern dieses Körpers,
- Fig. 6: in den Figurenteilen A bzw. B eine vergrößerte Darstellung entsprechend den Figurenteilen B bzw. C der Fig. 3.
- Fig. 7: in einer Längsschnitt-Darstellung ausschnittsweise eine zweite Ausführungsform eines Haltegliedes für einen Überrollbügel eines Überrollschutzsystems mit einem in einem Aufnahmekörper elastisch nachgebend exzentrisch gelagerten Haltebolzen,
- Fig. 8: einen Querschnitt durch die Haltevorrichtung nach Fig. 7 genommen entlang der Schnittlinie I-I in Fig. 7 zur Verdeutlichung der exzentrischen Lagerung,
- Fig. 9: in einer Einzelteil-Darstellung ein H-förmiges Verbindungsglied zur mechanischen Halterung des Haltebolzens in dem Aufnahmekörper nach Fig. 7, mit aufgesteckten elastischen Einsatzteilen,
- Fig. 10: eine Einzelteil-Darstellung nach Fig. 9 jedoch ohne aufgesteckte Einsatzteile,
- Fig. 11: eine Einzelteil-Darstellung des H-förmigen Verbindungsgliedes ohne Einsatzteile und ohne Haltebolzen,
- Fig. 12: in einer Draufsicht-Darstellung eine die offenen Enden der Schenkelrohre eines U-förmigen Überrollbügels befestigt aufnehmende Traverse in Form eines Profilkörpers, in dem das Halteglied nach den Figuren 7 bis 11 integriert ist, und
- Fig. 13: eine vergrößerte Ausschnitt-Darstellung aus Fig. 12, die die Integration des Haltegliedes in der Traverse näher zeigt.

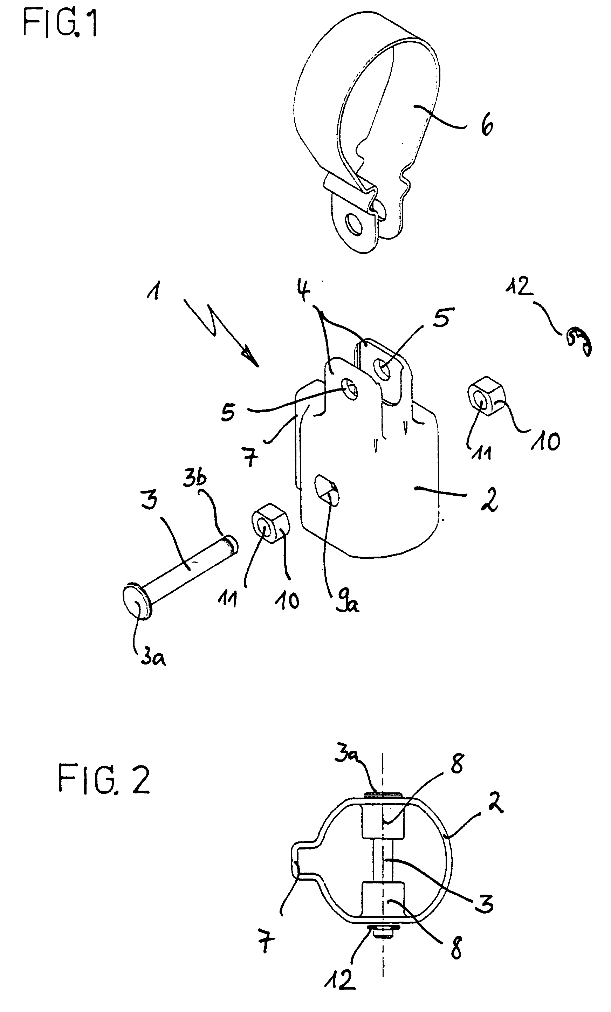

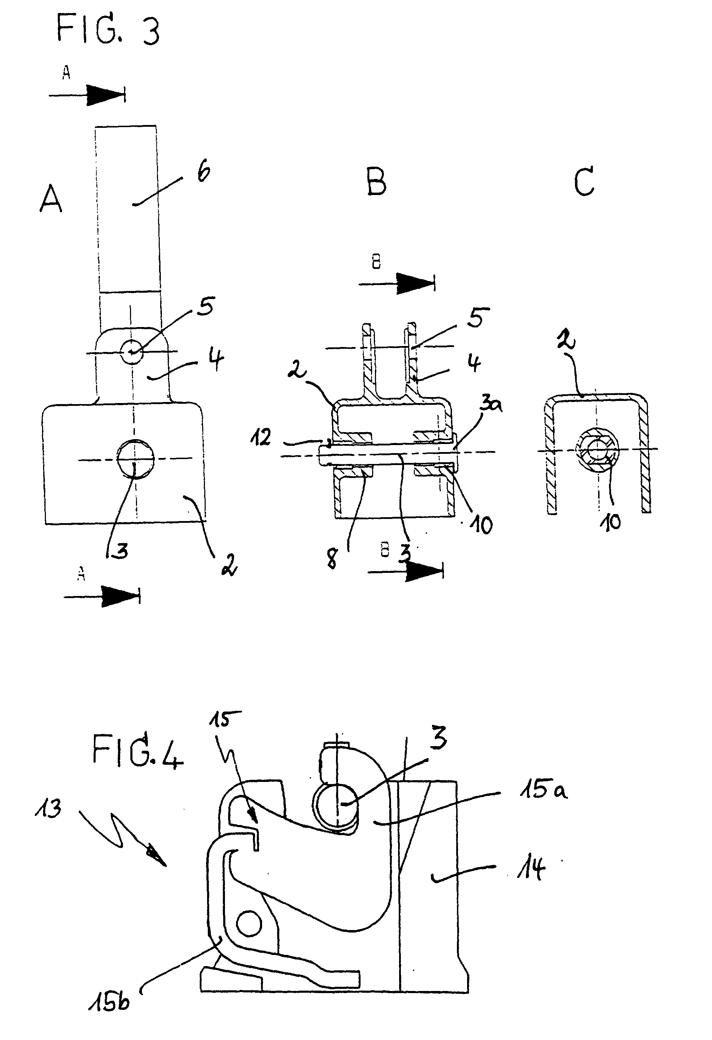

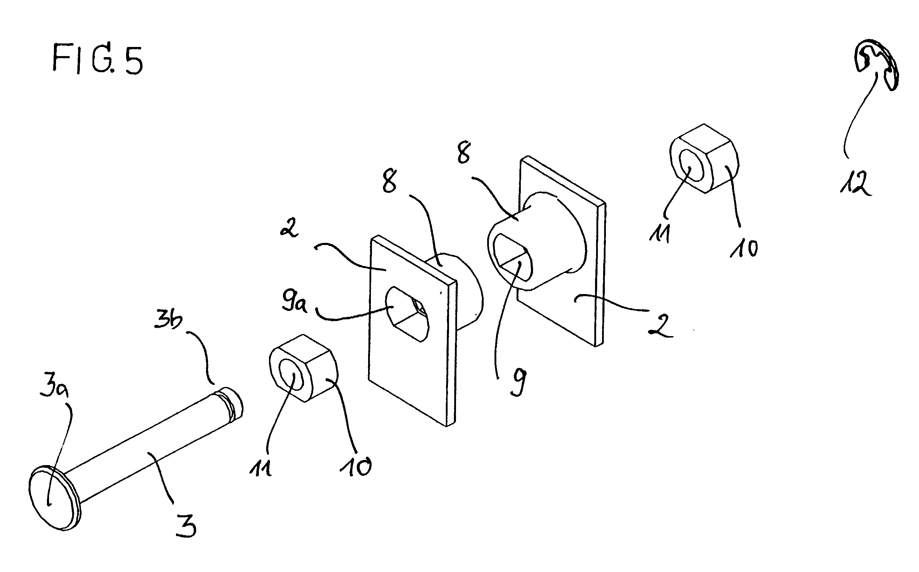

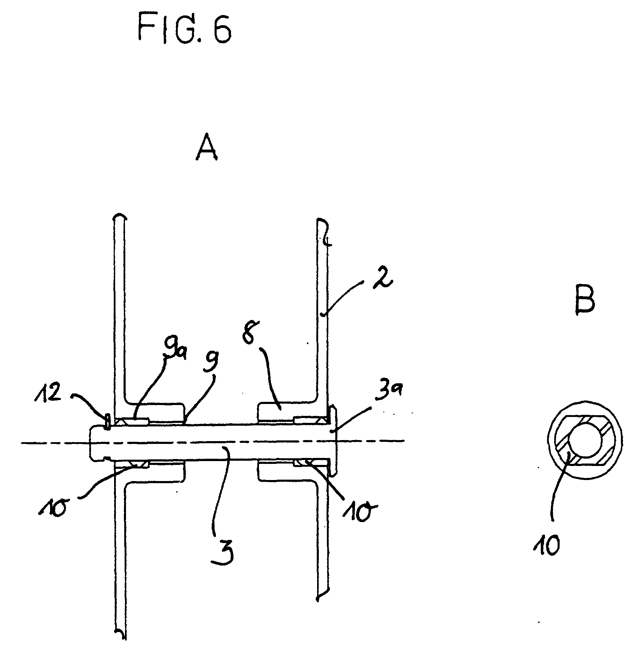

Die Figuren 1 bis 6 zeigen eine erste Ausführungsform eines Haltegliedes der erfindungsgemäßen Haltevorrichtung für einen (nicht dargestellten) Überrollkörper, vorzugsweise Überrollbügel, eines Überrollschutzsystems. Das Halteglied 1 weist einen allseits ummantelten, unten offenen und im Querschnitt (Fig. 3 A) gabelförmigen Aufnahmekörper 2 für einen Haltebolzen 3 auf, der in Wirkeingriff mit einem sensorgesteuerten Auslösesystem 14 bringbar ist (Fig. 4). Der glockenförmige Aufnahmekörper 2 weist an der Oberseite zwei Befestigungslaschen 4 mit Bohrungen 5 auf, mittels derer er an einer Schelle 6 befestigbar ist, die ihrerseits, ähnlich der Konstruktion nach der eingangs zitierten DE 43 42 400 A 1, am Querbügel des Überrollkörpers befestigbar ist. Der Aufnahmekörper 2 besitzt dabei an einer Seite seines Mantels eine Ausformung 7, um ein Verschwenken des Hebels 15 b des Doppelhebelsystems 15 zu ermöglichen.

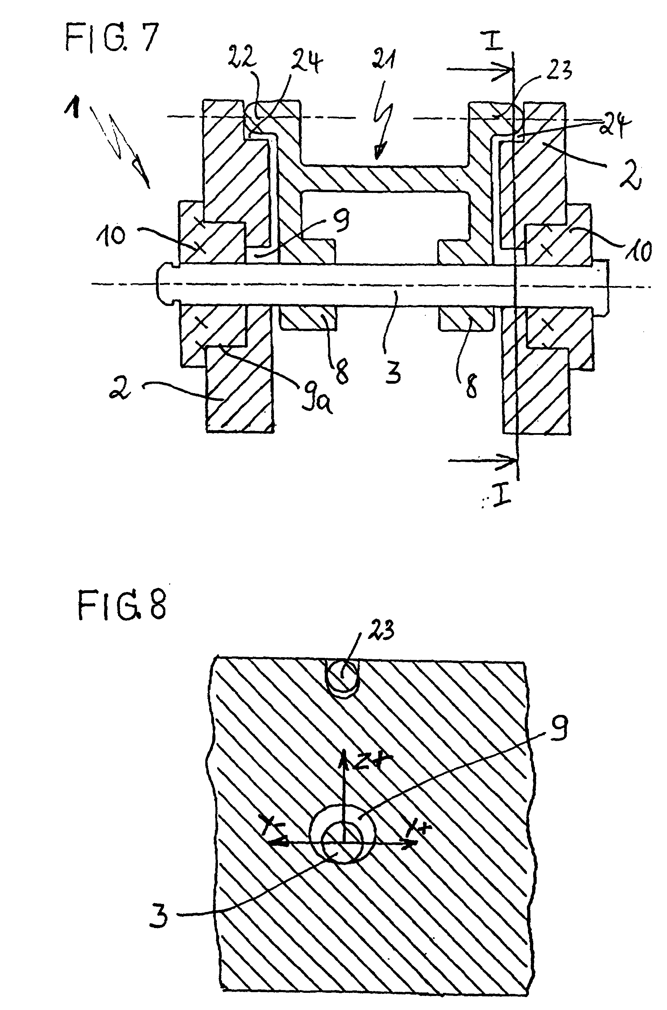

Andere Ausbildungen des Aufnahmekörpers, beispielsweise als offene Gabel, und dessen Befestigung an dem Überrollbügel, z.B. alternativ an einem Querjoch, sind denkbar, wie anhand der Figuren 7 - 13 noch gezeigt werden wird. Die ummantelte, dargestellte Ausführungsform nach Fig. 1 verhindert jedoch mit Vorteil ein Eindringen von Fremdkörpern in das Haltesystem, was zum Ausfall des Systems führen könnte, gewährleistet daher eine Schutzfunktion.

Der glockenförmige Aufnahmekörper 2 besitzt innen an zwei gegenüberliegenden Seiten jeweils einen angeformten Lagerzapfen 8 zur Aufnahme des Haltebolzens 3. Sowohl die zugehörige Bohrung in dem Mantel des Aufnahmekörpers 2 als auch die Bohrung in den Lagerzapfen 8 selbst sind als Langloch 9 ausgebildet, wie auch die Fig. 5 zeigt. Die Langlöcher sind in sich abgesetzt, d.h. sie weisen an beiden Seiten des Aufnahmekörpers 2 einen äußeren Abschnitt mit einer größeren Ausnehmung 9 a auf, die nicht kreisrund ist, sondern die auf der oberen und unteren Seite einen gradlinigen Abschnitt besitzt. Diese Ausnehmung 9 a nimmt jeweils eine komplementär konfigurierte elastische Einlage 10 mit einer mittigen Bohrung 11 auf. Diese Einlage 10 wird vorzugsweise aus einem elastomeren Material, z.B. Zellkautschuk hergestellt.

Im montierten Zustand des Haltebolzens 3 liegt dieser mit seinem Kopf 3 a an der Außenfläche der einen Einlage 10 bzw. an dem diese umgebenden Rand des Langloches 9 a an, wogegen sein anderes Ende eine rillenförmige Nut 3 a besitzt, die einen üblichen Sicherungsring 12 aufnimmt.

Durch die elastischen Einlagen 10 in der Langlochausnehmung 9 a und dadurch, daß der Innendurchmesser der Lagerzapfen 8 um ein vorgegebenes Maß größer als der Durchmesser des Haltebolzens 3 ist, kann sich der Haltebolzen 3 in dem Langloch 9, 9 a radial verschieben, wodurch Bauteiltoleranzen ausgeglichen und ein Verspannen des Systems beim Wiedereinfahren in das Auslösesystem (Fig. 4) verhindert werden können. Die elastischen Einlagen 10 lassen daher zwar eine Verschiebung des Haltebolzens 3 zu, halten ihn jedoch unbelastet in der Ideallage. Durch den Absatz im Übergang von der äußeren größeren Langlochausnehmung 9 a zu dem Innenabschnitt des Langloches 9 im Lagerzapfen 8 wird verhindert, daß sich die Einlagen 10 axial verschieben.

Der glockenförmige Aufnahmekörper kann aus einem metallischen Werkstoff hergestellt werden. Wirtschaftlicher läßt sich der Aufnahmekörper aus Kunststoff herstellen, insbesondere im Wege des Spritzgießens, weil dann insbesondere auch in einem Arbeitsgang die Zapfen 8 angespritzt werden können.

Die Fig. 4 zeigt den Wirkeingriff des Haltebolzens 3 mit einem durch die DE 197 50 693 A 1 bekannten Auslösesystem 13.

Das Auslösesystem besteht vorzugsweise aus einem Crashmagneten 14 und einem davon betätigbaren Doppelhebelsystem 15 als Auslöseglied für den Wirkeingriff mit dem Haltebolzen 3. Bei Betätigung des Crashmagneten 14 wird der den Haltebolzen 3 verriegelnde Hebel 15a (aufgrund eines Verschwenkens des Hebels 15b) im Uhrzeigersinn verschwenkt und gibt den Haltebolzen 3 und damit den Überrollkörper frei, der aufgrund der nicht dargestellten Antriebsfeder in seine obere Stützlage schnellt.
Beim Wiedereinfahren des Haltebolzens 3 in die Haltestellung werden durch die erfindungsgemäßen Maßnahmen Bauteil- und Montagetoleranzen ausgeglichen, ohne daß ein Verspannen des Auslösesystems auftritt, das eine nachfolgende Auslösung beeinträchtigen könnte.

Die Figuren 7 bis 13 zeigen in verschiedenen Darstellungen und Ansichten eine zweite, bevorzugte Ausführungsform der Erfindung. Dabei sind die mit den Komponenten der ersten Ausführung nach den Figuren 1 - 6 übereinstimmenden bzw. wirkungsgleichen Komponenten mit denselben Bezugsziffern versehen. Da die Überrollschutzsysteme als solche mit im Ruhezustand gegen die Kraft von vorgespannten Druckfedern und im Crashfall ausfahrbaren Überrollkörpern hinlänglich bekannt sind, zeigen die Figuren 7 - 13 nur das erfindungsgemäß ausgebildete Halteglied 1 mit einem Haltebolzen 3, der in lösbarer mechanischer Wirkverbindung mit dem Auslöseglied eines sensorgesteuerten Auslösesystem steht, wie es in Fig. 4 dargestellt ist.

Das Halteglied 1 weist einen Aufnahmekörper 2 auf, der in Fig. 1 nur schematisch dargestellt ist, und der mit dem Überrollkörper in mechanischer Verbindung steht. Dies kann beispielsweise, wie anhand der Figuren 1 - 6 beschrieben, über einen glockenförmigen Aufnahmekörper geschehen. Die Form des Aufnahmekörpers bzw. seine Verbindung mit dem Überrollkörper wird letztendlich generell durch die jeweilige Konstruktion des Überrollschutzsystems bestimmt, wobei eine weitere Ausführungsform nunmehr beschrieben wird.

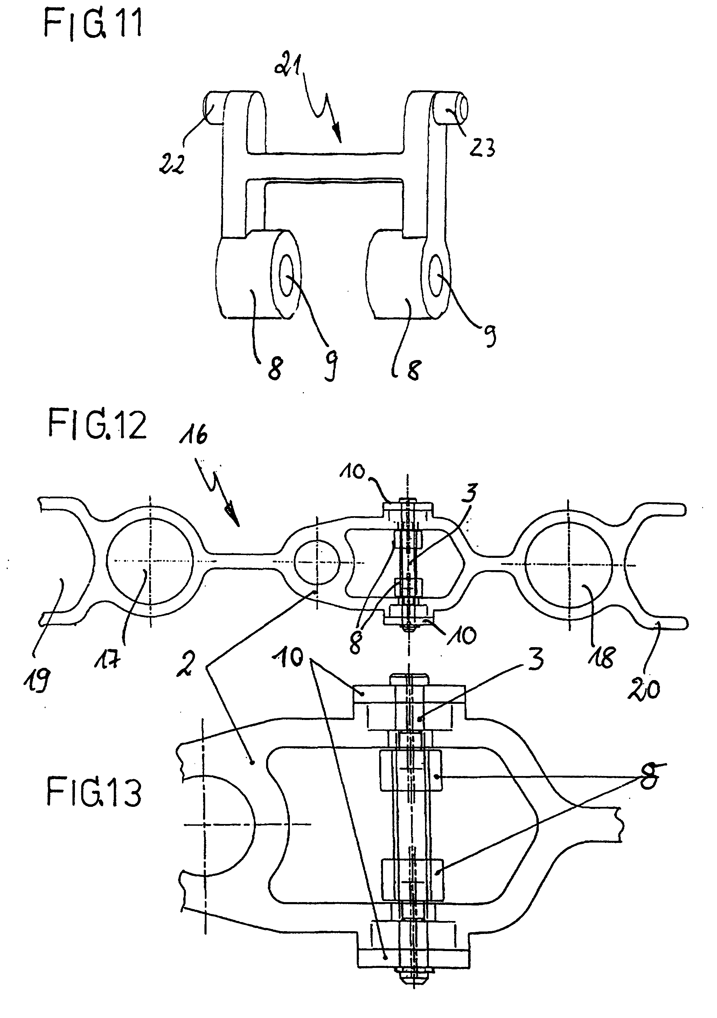

Im dargestellten Ausführungsbeispiel ist in den Figuren 12 und 13 ein Profilkörper 16 dargestellt, der in Öffnungen 17,18 die Schenkelrohre eines U-förmigen Überrollbügels aufnimmt, die dort mit dem Profilkörper 16, der somit eine untere Traverse des Überrollbügels bildet, befestigt sind, so daß die Traverse 16 mit dem Überrollbügel ein- und ausgefahren wird. Dabei dienen die stirnseitigen Fortsätze 19,20 zur Führung in U-förmigen Seitenprofilen einer das Systemgehäuse bildenden Kassette. Wie die Figuren 12 und 13 zeigen, bildet sozusagen das mittlere Profilteil der Traverse den Aufnahmekörper 2 für den Haltebolzen 3, d.h. der Aufnahmekörper 2 ist in diesem Beispiel kein separates Teil wie im Fall des ersten Ausführungsbeispieles, sondern ist in der Traverse 16, die vorzugsweise aus einem Aluminium-Strangpreßprofil gefertigt wird, integriert.

Im Aufnahmekörper 2 sind, wie im Fall der ersten Ausführungsform, einmal Langloch-Durchgangsbohrungen 9 und zum anderen darin abgesetzte Ausnehmungen 9a, in denen jeweils ein elastisch nachgebendes Einsatzteil 10 aufgenommen ist, ausgebildet, wobei das Einsatzteil jeweils von dem Haltebolzen 3 durchdrungen ist. Vorzugsweise besteht dabei das Einsatzteil 10 aus einem elastomeren Material, vorzugsweise Zellkautschuk.

Wie man aus den Figuren 7 und 8 erkennt, liegt die Ausnehmung 9a, die das Einsatzteil 10 aufnimmt, jeweils exzentrisch zur Langloch-Duchgangsbohrung 9, wobei das Maß der Exzentrizität so bestimmt ist, daß im unbelasteten Zustand der Haltebolzen 3 in Richtung der Halte-Wirkkraft (Z-) direkt an der Wandung der Langloch-Durchgangsbohrung anliegt. Dadurch wird das elastische Einsatzteil bei eingefahrenem Überrollbügel, wenn also die Haltekraft durch die Federvorspannung der Antriebsfedern voll auf den Haltebolzen 3 wirkt, in diesem Bereich geschont. Dennoch ist, wie aus Fig. 8 zu erkennen ist, die elastische Lagerung zum Fehlerausgleich durch die Beweglichkeit des Haltebolzens in Y ± und in Z+ Richtung voll gewährleistet. Im Fall der ersten Ausführungsform ist dabei die Ausnehmung konzentrisch zur Durchgangsbohrung, wodurch das Einsatzteil in Richtung der Haltewirkkraft ständig belastet ist.

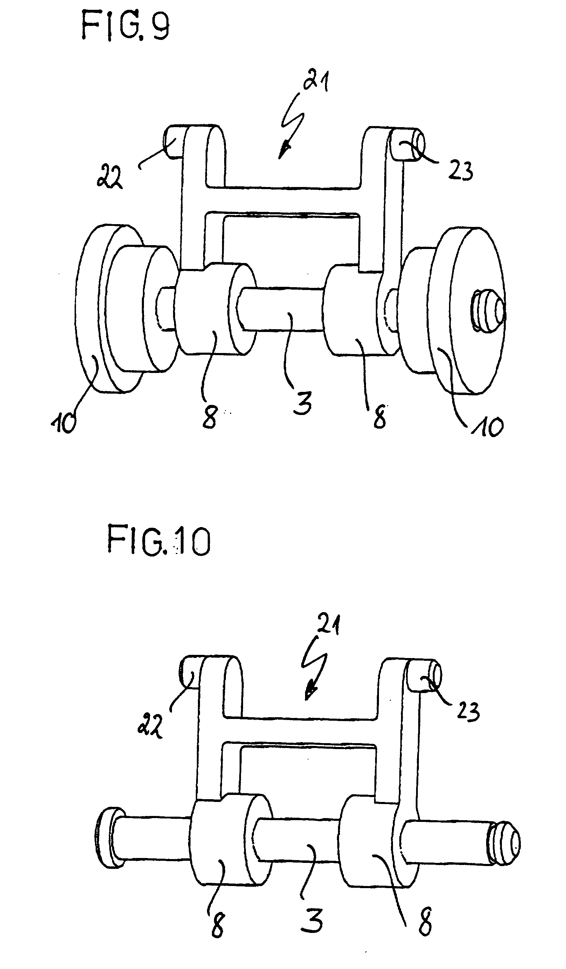

Der Haltebolzen 3 ist weiterhin in Lagerzapfen 8 gehaltert, die jedoch in Gegensatz zu der ersten Ausführungsform nicht einstückig am Aufnahmekörper 2 angeformt sind, d.h. nicht ein Teil des Aufnahmekörpers 2 bilden, sondern die Teile eines H-förmigen Verbindungsgliedes 21 sind (Fig. 11), das Justierzapfen 22 und 23 besitzt, mit denen es in komplementären Ausnehmungen 24, wie die Fig. 7 zeigt, justierbar gelagert ist. Die Lagerzapfen 8 sind dabei, wie die Figuren 9 und 10 zeigen, auf dem Haltebolzen 3 gelagert. Diese direkte Lagerung der Lagerzapfen 8 auf dem wiederum elastisch gelagerten Haltebolzen 3 ermöglicht den Ausgleich von den Lagetoleranzen, die bei der Montage des Auslösesystems und des Haltebolzens 3 entstehen.

## Patentansprüche

1. Haltevorrichtung für den Überrollkörper eines Überrollschutzsystems für Kraftfahrzeuge, das ein am Überrollkörper befestigtes Halteglied (1) mit einem Haltebolzen (3) aufweist, der in lösbarer mechanischer Wirkverbindung mit einem Auslöseglied (15) eines sensorgesteuerten Auslösesystems (13) steht, **dadurch gekennzeichnet, daß** der Haltebolzen (3) in dem Halteglied (1) radial elastisch nachgebend gehaltert ist.

2. Haltevorrichtung nach Anspruch 1, **dadurch gekennzeichnet, daß** das Halteglied (1) einen Aufnahmekörper (2) aufweist, der an zwei gegenüberliegenden Bereichen Durchgangs-Bohrungen (9) für den Haltebolzen (3) besitzt, die eine elastisch nachgebende Auskleidung (10) aufweisen.

3. Haltevorrichtung nach Anspruch 2, **dadurch gekennzeichnet, daß** die Durchgangs-Bohrungen (9) in der Wandung des Aufnahmekörpers (2) als Langloch ausgebildet sind, das sich quer zur Wirkrichtung der Haltekraft erstreckt.

4. Haltevorrichtung nach Anspruch 3, **dadurch gekennzeichnet, daß** die Langloch-Durchgangsbohrungen (9) als abgesetzte Langlöcher ausgebildet sind, mit der größere Ausnehmung (9 a) am wandseitigen Ende, und in der größere Ausnehmung (9 a) ein komplementär geformtes, elastisch nachgebendes Einsatzteil (10) aufgenommen ist.

5. Haltevorrichtung nach Anspruch 4, **dadurch gekennzeichnet, daß** die abgesetzte Ausnehmung (9a) jeweils exzentrisch zu den Langloch-Durchgangsbohrungen (9) in dem Aufnahmekörper (2) ausgebildet ist, derart, daß der Haltebolzen (3) in Richtung der Halte-Wirkkraft direkt an der Wandung der Langloch-Durchgangsbohrungen (9) anliegt.

6. Haltevorrichtung nach einem der Ansprüche 2 bis 5, **dadurch gekennzeichnet, daß** die Durchgangsbohrungen (9) innen angeformte Lagerzapfen (8) für den Haltebolzen (3) besitzen.

7. Haltevorrichtung nach einem der Ansprüche 1 bis 5, **dadurch gekennzeichnet, daß** auf dem Haltebolzen (3) Lagerzapfen (8) gelagert sind, die Teil eines H-förmigen Verbindungsgliedes (21) sind, das an seinen, den Lagerzapfen (8) abgewandten Enden jeweils einen Justierzapfen (22,23) zur Halterung in dem Aufnahmekörper (2) besitzt.

8. Haltevorrichtung nach einem der Ansprüche 4 bis 7, **dadurch gekennzeichnet, daß** das Einsatzteil (10) aus einem elastomeren Material, vorzugsweise Zellkautschuk, besteht.

9. Haltevorrichtung nach einem der Ansprüche 2 bis 8, **dadurch gekennzeichnet, daß** der Aufnahmekörper glockenförmig ausgebildet ist und an seiner Oberseite zwei Befestigungslaschen (4) zur Befestigung mit einer Schelle (6) angeformt sind, und die Schelle (6) mit dem Überrollkörper verbindbar ist.

10. Haltevorrichtung nach einem der Ansprüche 2 bis 8, mit einem Überrollkörper in Form eines U-förmigen Übberrollbügels mit zwei parallelen Schenkelrohren, die an ihren offenen Enden über eine durch einen Profilkörper gebildeten Traverse (16) miteinander verbunden sind, **dadurch gekennzeichnet, daß** der Aufnahmekörper (2) in der Traverse (16) integriert ist.

## Claims

1. A retaining device for the rollover body of a rollover protection system for motor vehicles, having a retaining member (1) which is fastened to the rollover body and has a retaining pin (3) which is in disengageable mechanical operative connection with a release member (15) of a sensor-controlled release system (13), **characterised in that** the retaining pin (3) is mounted in the retaining member (1) in a radially resiliently yielding manner.

2. A retaining device according to claim 1, **characterised in that** the retaining member (1) has a receiving body (2) having through-bores (9) in two opposite regions for receiving the retaining pin (3), which through-bores (9) have a resiliently yielding lining (10).

3. A retaining device according to claim 2, **characterised in that** the through-bores (9) are constructed in the wall of the receiving body (2) as a slot extending transversely to the direction of action of the retaining force.

4. A retaining device according to claim 3, **characterised in that** the slot through-bores (9) are constructed as stepped slots having the larger recess (9a) at the wall-side end, and there is received in the larger recess (9a) a resiliently yielding insert (10) of complementary shape.

5. A retaining device according to claim 4, **characterised in that** the stepped recess (9a) is formed in the receiving body (2) eccentrically with respect to the slot through-bores (9) in such a manner that the retaining pin (3) rests directly against the wall of the slot through-bores (9) in the direction of action of the retaining force.

6. A retaining device according to any one of claims 2 to 5, **characterised in that** the through-bores (9) have bearing necks (8) for the retaining pin (3) which are integrally formed on the inside.

7. A retaining device according to any one of claims 1 to 5, **characterised in that** there are supported on the retaining pin (3) bearing necks (8) which are part of an H-shaped connection member (21) having at each of its ends remote from the bearing necks (8) an adjusting peg (22, 23) for mounting in the receiving body (2).

8. A retaining device according to any one of claims 4 to 7, **characterised in that** the insert (10) consists of an elastomeric material, preferably cellular rubber.

9. A retaining device according to any one of claims 2 to 8, **characterised in that** the receiving body is bell-shaped and two fastening lugs (4) for fastening to a clamping collar (6) are integrally formed on its upper side, and the clamping collar (6) is connectable to the rollover body.

10. A retaining device according to any one of claims 2 to 8, having a rollover body in the form of a U-shaped roll bar with two parallel leg pipes which are connected to each other at their open ends via a cross-piece (16) formed by a profiled section body, **characterised in that** the receiving body (2) is integrated in the cross-piece (16).

## Revendications

1. Dispositif de retenue pour le corps de retournement d'un système de protection au retournement pour véhicules automobiles, qui présente un organe de retenue (1) fixé au corps de retournement et possédant une goupille de retenue (3) qui est elle-même en liaison de coopération mécanique séparable avec un organe de déclenchement (15) appartenant à un système de déclenchement (13) commandé par capteur, **caractérisé en ce que** la goupille de retenue (3) est tenue dans l'organe de retenue (1) de façon à pouvoir fléchir élastiquement dans la direction radiale.

2. Dispositif de retenue selon la revendication 1, **caractérisé en ce que** l'organe de retenue (1) présente un corps de support (2) qui possède, sur deux zones opposées, des perçages de passage (9) pour la goupille de retenue (3), perçages qui présentent un revêtement (10) capable de fléchir élastiquement.

3. Dispositif de retenue selon la revendication 2, **caractérisé en ce que** les perçages de passage (9) ménagés dans la paroi du corps de support (2) sont réalisés sous la forme d'un trou allongé qui s'étend transversalement à la direction d'action de la force de retenue.

4. Dispositif de retenue selon la revendication 3, **caractérisé en ce que** les perçages de passage (3) en trou allongé sont constitués par des trous allongés épaulés qui présentent le plus grand évidement (9a) à l'extrémité côté paroi et **en ce que**, dans le plus grand évidement (9a) est logée une pièce d'insertion (10) de forme complémentaire, capable de fléchir élastiquement.

5. Dispositif de retenue selon la revendication 4, **caractérisé en ce que** l'évidement épaulé (9a) est conformé dans le corps de support (2) excentriquement par rapport au perçage de passage (9) en trou allongé, de telle manière que la goupille de retenue (3) soit directement en appui contre la paroi des perçages de passage (9) en forme de trou allongé selon la direction de la force d'action de retenue.

6. Dispositif de retenue selon une des revendications 2 à 5, **caractérisé en ce que** les perçages de passage (9) possèdent intérieurement des tétons de portée (8) formés intérieurement pour la goupille de retenue (3).

7. Dispositif de retenue selon une des revendications 1 à 5, **caractérisé en ce que**, sur la goupille de retenue (3), sont montés des tétons de portée (8) qui font partie d'un élément de liaison (21) en forme de H qui possède, à chacune de ses extrémités éloignées du téton de portée (8) un téton de réglage (22, 23) destiné à être monté dans le corps de support (2).

8. Dispositif de retenue selon une des revendications 4 à 7, **caractérisé en ce que** la pièce d'insertion (10) est faite d'une matière élastomère, de préférence de caoutchouc alvéolaire.

9. Dispositif de retenue selon une des revendications 2 à 8, **caractérisé en ce que** le corps de support est réalisé en forme de cloche et que, sur son côté supérieur, sont formées deux pattes de fixation (4) pour assurer la fixation avec un collier (6) et **en ce que** le collier (6) peut être assemblé au corps de retournement.

10. Dispositif de retenue selon une des revendications 2 à 8, comprenant un corps de retournement présentant la forme d'un arceau de retournement en forme de U qui comprend deux tubes parallèles formant les branches qui sont reliés entre eux à leurs extrémités d'ouverture par une traverse (16) formée par un corps profilé, **caractérisé en ce que** le corps de support (2) est intégré dans la traverse (16).
